# EUROPÄISCHE PATENTANMELDUNG

(11) **EP 2 500 597 A1**
(43) Veröffentlichungstag der Anmeldung: **19.09.2012**
(21) Anmeldenummer: 11158736.6
(22) Anmeldetag: 17.03.2011
(51) Int. Cl.: F16D 65/14, F03D 7/04

(54) **Bremse für Windkraftanlagen**

(71) Anmelder: Hanning & Kahl GmbH & Co. KG, 33813 Oerlinghausen (DE)
(72) Erfinder: Westermann, Wilhelm, 33719, Bielefeld (DE)
(74) Vertreter: TER MEER - STEINMEISTER & PARTNER GbR

(57) **Zusammenfassung**

Bremse für Windkraftanlagen, mit einem schwimmend gelagerten, den Rand eines Bremsrotors umgreifenden Bremssattel (10), der eine feste und eine bewegliche Bremsbacke aufweist, einem Spindelantrieb (16) für die bewegliche Bremsbacke, einer Antriebsquelle, und einem Getriebe, das die Antriebsquelle mit dem Spindelantrieb (16) verbindet, dadurch gekennzeichnet, dass die Antriebsquelle ein Motor (32) ist, der eine Schnecke (30) antreibt, und dass der Spindelantrieb (16) eine außen als Schneckenrad ausgebildete Mutter (28) aufweist, die zusammen mit der Schnecke (30) einen Schneckentrieb bildet.

## Beschreibung

Die Erfindung betrifft eine Bremse für Windkraftanlagen, mit einem schwimmend gelagerten, den Rand eines Bremsrotors umgreifenden Bremssattel, der eine feste und eine bewegliche Bremsbacke aufweist, einem Spindelantrieb für die bewegliche Bremsbacke, einer Antriebsquelle, und einem Getriebe, das die Antriebsquelle mit dem Spindelantrieb verbindet.

In Windkraftanlagen dient eine solche Bremse beispielsweise dazu, im Fall eines plötzlichen Wegfalls der Last den Rotor der Windkraftanlage abzubremsen und stillzusetzen. Wahlweise kann eine solche Bremse jedoch auch als sogenannte Azimutbremse eingesetzt werden, die die Gondel der Windkraftanlage in der auf die jeweilige Windrichtung ausgerichteten Position hält.

Es sind Bremsen für Windkraftanlagen bekannt, bei denen die Antriebsquelle durch eine Kolben-/Zylinder-Einheit gebildet wird, die über einen Hebel auf den Spindelantrieb wirkt.

Aufgabe der Erfindung ist es, eine Bremse für Windkraftanlagen zu schaffen, die sich durch einen kompakten Aufbau auszeichnet.

Diese Aufgabe wird bei einer Bremse der eingangs genannten Art dadurch gelöst, dass die Antriebsquelle ein Motor ist, der eine Schnecke antreibt, und dass der Spindelantrieb eine außen als Schneckenrad ausgebildete Mutter aufweist, die zusammen mit der Schnecke einen Schneckentrieb bildet.

Erfindungsgemäß kann somit als Motor beispielsweise ein Elektromotor eingesetzt werden, der mit relativ hoher Drehzahl läuft und dessen Ausgangswelle über die Schnecke direkt auf den Spindelantrieb wirkt. Der Schneckentrieb sorgt dabei für eine Drehzahluntersetzung, die es erlaubt, ein hohes Drehmoment auf die Mutter des Spin-Spindelantriebs und somit eine hohe axiale Kraft auf die Spindel und damit letztlich auf die Bremsbacken auszuüben. Besonders vorteilhaft ist dabei, dass das Gehäuse des Motors zusammen mit einem Gehäuse des Spindelantriebs eine starre Einheit bilden kann, die unmittelbar an den Bremssattel angebaut sein kann.

Vorteilhafte Ausgestaltungen und Weiterbildungen der Erfindung sind in den Unteransprüchen angegeben. Die Merkmale der Ansprüche 2 bis 7 können auch bei Bremsen vorteilhaft sein, bei denen an Stelle des Schneckentriebs ein anderes Betätigungssystem für den Spindelantrieb vorgesehen ist. Weiterhin ist die Erfindung analog auch bei Federspeicherbremsen einsetzbar, bei denen der Spindeltrieb und ggf. der Schneckentrieb zum Spannen einer Energiespeicherfeder dienen.

In einer bevorzugten Ausführungsform weist der Bremssattel einen Flansch auf, an den die durch das Gehäuse des Spindelantriebs und das Gehäuse des Motors gebildete Einheit angeflanscht ist. Die Flanschverbindung erlaubt es, die Antriebseinheit in unterschiedlichen Winkelstellungen am Bremssattel zu montieren, so dass die Richtung, in der der im wesentlichen quer zur Spindelachse verlaufende Motor vom Spindelgehäuse absteht, je nach vorhandenem Platzangebot gewählt werden kann.

Vorzugsweise ist die Spindel des Spindelantriebs drehfest und axial verschiebbar in einem Lagerschemel geführt, der seinerseits elastisch mit dem Gehäuse des Spindelantriebs verbunden ist. Wenn die Bremse aktiviert wird und die Bremsbacken den Bremsrotor erfassen, nimmt zwar der Reibungswiderstand zwischen der Spindel und dem Lageschemel zu, doch erlaubt es die elastische Befestigung des Lagerschemels, dass dieser der axialen Bewegung der Spindel folgen kann und somit die Bremsbacken fest angepresst werden können. Dadurch ist es möglich, mit einem kleinbauenden Motor ein hohes Bremsdrehmoment zu erzeugen und zugleich das Getriebe so auszulegen, dass die Bremse sich schnell aktivieren und lösen lässt.

Im folgenden wird ein Ausführungsbeispiel anhand der Zeichnung näher erläutert. Es zeigen:
- Fig. 1: eine Schnittdarstellung einer erfindungsgemäßen Bremse; und
- Fig. 2: eine perspektivische Ansicht der Bremse.

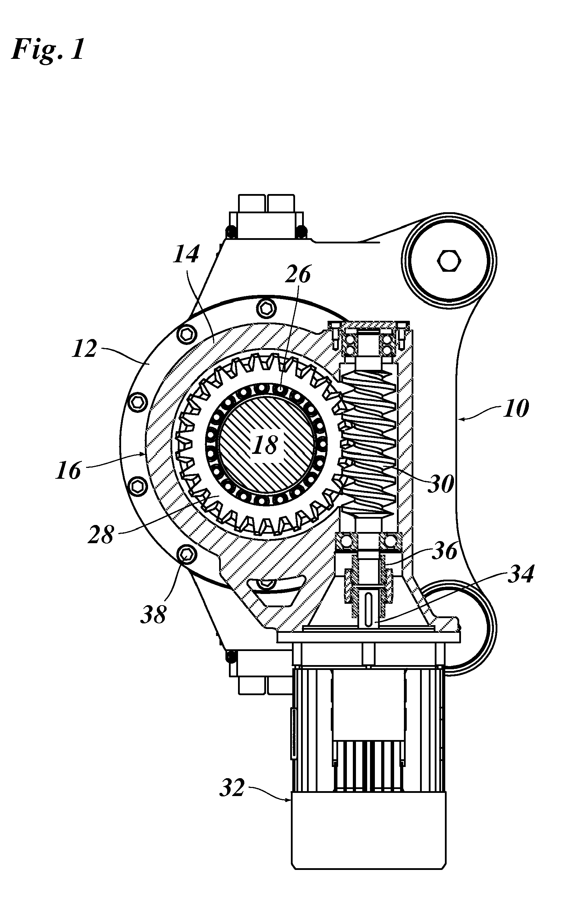

Die in Fig. 1 gezeigte Bremse weist einen Bremssattel 10 auf, an den mittels einer Flanschverbindung 12 ein Antriebsgehäuse 14 eines Spindelantriebs 16 angeflanscht ist.

Der Spindelantrieb 16 weist eine Spindel 18 auf, die in Fig. 1 ebenso wie das Antriebsgehäuse 14 im Querschnitt dargestellt ist.

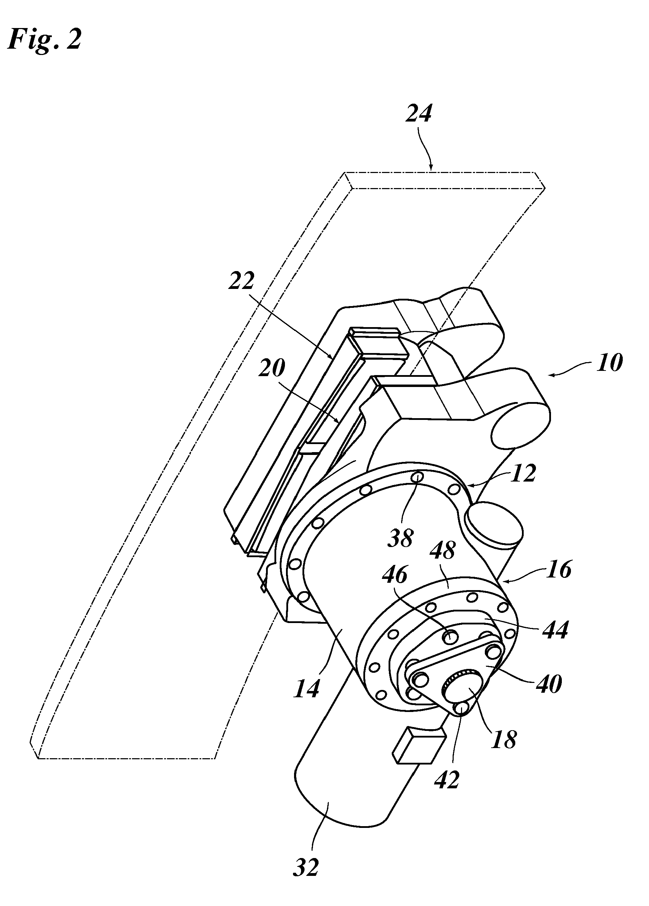

Ein in Fig. 1 nicht sichtbares Ende der Spindel 18 ist mit einer Bremsbacke 20 (Fig. 2) verbunden, die in Axialrichtung der Spindel 18 beweglich in dem Bremssattel 10 gelagert ist und einer weiteren, starr am Bremssattel gehaltenen Bremsbacke 22 gegenüberliegt. Wie Fig. 2 zeigt, umgreift der Bremssattel 10 den Rand eines trommelförmigen Bremsrotors 24, von dem in Fig. 2 lediglich ein Ausschnitt strichpunktiert dargestellt ist. Die Bremsbacken 20, 22 liegen auf entgegengesetzten Seiten des Bremsrotors 24. Der Bremssattel 10 ist relativ zu dem Bremsrotor 24 schwimmend gelagert, so dass die beiden Bremsbacken 20 und 22 von entgegengesetzten Seiten her gleichmäßig gegen den Bremsrotor 24 angedrückt werden, wenn mit Hilfe des Spindelantriebs 16 eine axiale Kraft auf die bewegliche Bremsbacke 20 ausgeübt wird.

In Fig. 1 ist zu erkennen, dass die Spindel 18 über Wälzkörper 26 mit einem Innengewinde einer Mutter 28 in Eingriff steht. Die Spindel 18, die Wälzkörper 26 und die Mutter 28 bilden einen sogenannten Planeten-Wälz-Gewindespindelantrieb, bei dem die Wälzkörper 26 wie Planeten eines Planetengetriebes an der Spindel 18 und an der Mutter 28 abrollen. Die Wälzkörper 16 haben jeweils auf ihrem Umfang eine Serie von umlaufenden ringförmigen Rippen, deren Teilung der Teilung des Innengewindes der Mutter 28 und der Teilung des Außengewindes der Spindel 18 entspricht, so dass die Wälzkörper sowohl mit dem Innengewinde als auch mit dem Außengewinde in Eingriff stehen und deshalb in der Lage sind, eine axiale Kraft von der Mutter 28 auf die Spindel 18 zu übertragen, wenn die Mutter 28 relativ zur Spindel verdreht wird. Durch die planetenartigen Wälzkörper 26 wird dabei der Reibungswiderstand erheblich herabgesetzt.

Wie weiterhin in Fig. 1 zu erkennen ist, weist die Mutter 28 an ihrem äußeren Umfang einen Zahnkranz auf, der mit einer drehbar im Antriebsgehäuse 14 gelagerten Schnecke 30 in Eingriff steht. Die Mutter 28 und die Schnecke 30 bilden somit zusammen einen Schneckentrieb mit der Mutter 28 als Schneckenrad.

Die Schnecke 30 wird durch einen Motor 32, beispielsweise einen Elektromotor angetrieben, der so an das Antriebsgehäuse 14 angeflanscht ist, dass seine Ausgangswelle 34 koaxial zu der Schnecke 30 liegt. Durch eine Kupplung 36 ist die Schnecke 30 drehfest mit der Ausgangswelle 34 verbunden.

Die Flanschverbindung zwischen dem Bremssattel 10 und dem Antriebsgehäuse 14 wird gemäß Fig. 1 durch Schrauben 38 gebildet, die in gleichmäßigen Winkelabständen angeordnet sind, im gezeigten Beispiel in Winkelabständen von 36°. Somit ist es möglich, die Einheit aus Motor 32 und Antriebsgehäuse 14 je nach Platzangebot in unterschiedlichen Winkelstellungen an den Bremssattel 10 anzuflanschen.

Damit mit Hilfe des Spindelantriebs 16 eine axiale Kraft auf die bewegliche Bremsbacke 20 (Fig. 2) ausgeübt werden kann, muss die Spindel 18 relativ zu dem Antriebsgehäuse 14 drehfest, jedoch axial verschiebbar sein. In dem in Fig. 2 gezeigten Beispiel wird die drehfeste Verbindung zwischen der Spindel 18 und dem Antriebsgehäuse 14 durch einen Lagerschemel 40 gebildet, der auf ein aus dem Antriebsgehäuse 14 herausragendes Ende der Spindel 18 aufgekeilt ist. Der Lagerschemel 40 ist mit Bolzen 42 an einem Lagerblock 44 aus gummielastischem Material befestigt, der seinerseits mit Bolzen 46 an einem Bodenflansch 48 des Antriebsgehäuses 14 befestigt ist.

Wenn der Bremsrotor 24 gebremst werden soll, wird mit Hilfe des Motors 32 die Schnecke 30 angetrieben, und die Mutter 28 wird relativ zur Spindel 18 gedreht. Der Schneckentrieb bewirkt dabei eine beträchtliche Drehzahluntersetzung, so dass auch mit einem kleinbauenden Motor 32 ein hohes Drehmoment auf die Spindel 28 ausgeübt werden kann.

Da die Spindel 18 durch den Lagerschemel 40 drehfest gehalten ist, wird die Drehung der Mutter 28 in eine axiale Bewegung der Spindel 18 umgesetzt, so dass die bewegliche Bremsbacke 20 gegen den Bremsrotor 24 angedrückt wird. Sobald die beiden Bremsbacken 22 sich von entgegengesetzten Seiten her gegen den Bremsrotor 24 anlegen, nimmt der Widerstand, der der axialen Bewegung der Spindel 18 entgegenwirkt, abrupt zu. Dementsprechend erhöht sich auch das Drehmoment, das erforderlich ist, um die Spindel 18 drehfest zu halten.

Wenn die Spindel 18 direkt im Antriebsgehäuse 14 geführt wäre, so hätte diese Zunahme des Drehmoments zur Folge, dass auch der Reibungswiderstand zwischen der Spindel 18 und dem Antriebsgehäuse 14 zunehmen würde, so dass ein hohes Antriebsdrehmoment des Motors 32 erforderlich wäre, um die Bremsbacken 20, 22 fester gegen den Bremsrotor 24 anzudrücken.

Bei der hier gezeigten Konstruktion ermöglicht es jedoch die elastische Nachgiebigkeit des Lagerblockes 44, dass der Lagerschemel 40 der axialen Bewegung der Spindel ein Stück weit folgen kann, so dass die Bremsbacken trotz der erhöhten Reibung zwischen Spindel und Lagerschemel fest gegen den Bremsrotor 24 angepresst werden können. Durch eine Faserverstärkung des Lagerblockes 44 wird erreicht, das dieser zwar in Axialrichtung nachgiebig ist, in Drehrichtung aber sehr verwindungssteif ist, so das die in Umfangsrichtung wirkende Kraft über die Bolzen 42, 46 praktisch verformungsfrei vom Lagerschemel 40 auf den Bodenflansch 48 übertragen werden kann und somit die Spindel wirksam gegen Verdrehung gesichert bleibt.

In dem hier gezeigten Ausführungsbeispiel ist der Bremsrotor 24 eine zylindrische Trommel, deren Drehachse rechtwinklig zur Achse der Spindel 18 verläuft und deren Rand von dem Bremssattel 10 übergriffen wird. Die Bremsbacken 20 und 22 sind dementsprechend an die Krümmung der inneren bzw. äußeren Oberfläche des Bremsrotors 24 angepasst.

In einer anderen Ausführungsform könnte der Bremsrotor jedoch auch eine flache Bremsscheibe sein.

## Patentansprüche

1. Bremse für Windkraftanlagen, mit einem schwimmend gelagerten, den Rand eines Bremsrotors (24) umgreifenden Bremssattel (10), der eine feste (22) und eine bewegliche Bremsbacke (20) aufweist, einem Spindelantrieb (16) für die bewegliche Bremsbacke (20), einer Antriebsquelle, und einem Getriebe, das die Antriebsquelle mit dem Spindelantrieb (16) verbindet, **dadurch gekennzeichnet, dass** die Antriebsquelle ein Motor (32) ist, der eine Schnecke (30) antreibt, und dass der Spindelantrieb (16) eine außen als Schneckenrad ausgebildete Mutter (28) aufweist, die zusammen mit der Schnecke (30) einen Schneckentrieb bildet.

2. Bremse nach Anspruch 1, bei der der Spindelantrieb (16) ein Antriebsgehäuse (14) aufweist, das zusammen mit einem Gehäuse des Motors (32) eine starre Einheit bildet.

3. Bremse nach Anspruch 2, bei der die Einheit aus Antriebsgehäuse (14) und Motor (32) durch eine Flanschverbindung (12) mit in gleichmäßigen Winkelabständen angeordneten Schrauben (38) an den Bremssattel (10) angeflanscht ist.

4. Bremse nach einem der vorstehenden Ansprüche, bei der die Spindel (18) drehfest und axial verschiebbar in einem Lagerschemel (40) geführt ist, der seinerseits in Axialrichtung elastisch an einem Gehäuse (14) des Spindelantriebs (16) gehalten ist.

5. Bremse nach Anspruch 4, bei der der Lagerschemel (40) über einen Lagerblock (44) aus gummielastischem Material mit dem Gehäuse (14) verbunden ist.

6. Bremse nach Anspruch 5, bei der der Lagerblock (44) eine Faserverstärkung zur Erhöhung der Verwindungssteifigkeit aufweist.

7. Bremse nach Anspruch 5 oder 6, bei der der Lagerschemel (40) an einem aus dem Gehäuse (14) herausragenden Ende der Spindel (18) angeordnet ist und der Lagerblock (44) zwischen dem Lagerschemel (18) und einem Boden (48) des Gehäuses (14) eingefügt ist.
